# EUROPEAN PATENT SPECIFICATION

(11) **EP 2 251 569 B1**
(45) Date of publication and mention of the grant of the patent: **14.03.2012**
(21) Application number: 10162552.3
(22) Date of filing: 11.05.2010
(51) Int. Cl.: F16H 63/30, F16H 61/30

(54) **Shift hydraulic actuator**
Hydraulischer Schaltaktuator
Actionneur hydraulique à décalage

(30) Priority: 12.05.2009 JP 2009115998
(43) Date of publication of application: 17.11.2010
(73) Proprietor: Toyota Jidosha Kabushiki Kaisha, Toyota-shi, Aichi-ken, 471-8571 (JP)
(72) Inventor: Kano, Tomoyuki c/o Toyota Jidosha Kabushiki Kaisha, Aichi-ken 471-8571 (JP); Iwasaki, Yasuhisa c/o Toyota Jidosha Kabushiki Kaisha, Aichi-ken 471-8571 (JP); Shiozaki, Taro c/o Toyota Jidosha Kabushiki Kaisha, Aichi-ken 471-8571 (JP)
(74) Representative: Albutt, Anthony John

(56) References cited:
- US-A- 4 603 596
- US-A- 4 650 055
- US-A- 6 102 829
- US-A1- 2003 140 887

## Description

### BACKGROUND OF THE INVENTION

### 1. Field of the Invention

The invention relates to improvement in the quality of a shift hydraulic actuator for shifting a constant mesh vehicle automatic transmission.

### 2. Description of the Related Art

A shift hydraulic actuator is known, for example, from US-A-6102829. Japanese Utility Model Application Publication No. 62-16851 (JP-U-62-16851) describes a constant mesh vehicle transmission that establishes a gear in such a manner that one of a plurality of gear pairs having different gear ratios is selected to allow power transmission. Specifically, JP-U-62-16851 describes a vehicle automatic transmission that automatically operates to select one of the plurality of gear pairs to allow power transmission by a shift hydraulic actuator. In addition, JP-U-62-16851 also describes the above shift hydraulic actuator.

The shift hydraulic actuator described in JP-U-62-16851 is a typical double-acting hydraulic cylinder, and specifically includes a hydraulic piston and a piston shaft. The hydraulic piston is fitted in a cylinder body and is slidable in an axial direction. The piston shaft has an axis in the axial direction. Then, one end of the piston shaft is coupled to the hydraulic piston, and the other end of the piston shaft protrudes from the cylinder body and is operably coupled to a shift member in a gear case of the automatic transmission.

Here, in the automatic transmission described in JP-U-62-16851, it is assumed that hydraulic oil that presses the hydraulic piston, that is, hydraulic oil of the shift hydraulic actuator, and lubricating oil used in the gear case of the automatic transmission are of the same kind. In this case, for example, when high-viscosity oil that places importance on lubrication of gears of the automatic transmission is employed as the hydraulic oil and lubricating oil, the line resistance of hydraulic oil is large in a hydraulic control circuit of the shift hydraulic actuator. This delays a control response time of a solenoid valve, or the like, to consequently extend the shift time of the automatic transmission longer than necessary.

In addition, the viscosity of the hydraulic oil increases as the temperature decreases. Therefore, the line resistance increases as the temperature decreases. Particularly, an increase in line resistance at low temperatures is remarkable in high-viscosity oil. Then, as the line resistance exceeds a control pressure of the automatic transmission, hydraulic oil does not flow, and the shift hydraulic actuator becomes inoperable. Therefore, when the high-viscosity oil is employed, the operation lower limit temperature of the automatic transmission is higher than that when low-viscosity oil is employed.

On the other hand, for example, when low-viscosity oil that places importance on the operating performance of the shift hydraulic actuator is employed as the hydraulic oil and lubricating oil, the drag torques of gears in the gear case decrease at high temperatures as compared with the case where high-viscosity oil is employed, so noise (tooth hammering noise) easily occurs at a meshing portion, or the like, of an idler gear that is not transmitting driving force.

In addition, when the low-viscosity oil is employed, oil film formation is thin or no oil film is formed at sliding portions of bearings and gears of the automatic transmission. Because of the insufficient oil film formation, there is a possibility that durability of bearings and gears of the automatic transmission decreases.

Thus, the hydraulic oil and the lubricating oil are desirably not of the same kind but of different kinds suitable for respective applications. However, when the hydraulic oil and the lubricating oil are of different kinds as described above, there may occur a problem on a seal member of the shift hydraulic actuator.

More specifically, for example, if brake fluid is used as low-viscosity oil for the hydraulic oil and a material (acrylic rubber, or the like) suitable for the lubricating oil of the automatic transmission is used as the seal member, the brake fluid is aggressive to the seal member of the material suitable for the lubricating oil. Therefore, there is a possibility that the durability of the seal member decreases and the seal member cannot exhibit sufficient sealing performance.

In addition, fluororubber may be conceived as the material of the seal member suitable for any of the low-viscosity oil and the high-viscosity oil; however, the fluororubber easily hardens at low temperatures as compared with other materials of the seal member. Thus, when fluororubber is employed as the material of the seal member, there is a possibility that the seal member cannot exhibit sufficient sealing performance at low temperatures. In addition, other materials may also be employed; however, the seal member becomes expensive, so the cost increases. Any of the above problems is described neither in JP-U-62-16851 nor in the public domain. US-A-4650055 discloses clutch release apparatus.

### SUMMARY OF THE INVENTION

The invention provides a shift hydraulic actuator that can possess sufficient sealing performance in a constant mesh vehicle automatic transmission.

An aspect of the invention relates to a shift hydraulic actuator as defined in claim 1.

With the shift hydraulic actuator according to the aspect of the invention, it is possible to select hydraulic oil of a type suitable for hydraulic control without requiring the hydraulic oil for the function of lubricating gears, or the like. Thus, it is possible to improve performance of response, or the like, regarding hydraulic control over the shift hydraulic actuator. In addition, it is possible to select lubricating oil of a type suitable for lubrication without requiring the lubricating oil for, for example, improvement in the characteristic of hydraulic control over the shift hydraulic actuator, and it is possible to, for example, improve durability of bearings and gears and reduce gear noise. Furthermore, the materials of the first seal member and second seal member are respectively suitable for the hydraulic oil and the lubricating oil, so it is possible to give sufficient sealing performance to any of the hydraulic oil and the lubricating oil.

Because one or two or more of the first seal members are provided, and a relative distance between the second seal member and the first seal member located closest to the second seal member in the axial direction is longer than or equal to the overall stroke of the piston shaft in the axial direction, an oil film of the hydraulic oil stuck on the piston shaft does not contact with the second seal member even when the piston shaft is moved, and an oil film of the lubricating oil stuck on the piston shaft does not contact with the first seal member even when the piston shaft is moved. Thus, it is possible to further sufficiently ensure the sealing performance of each of the first seal member and the second seal member.

The hydraulic oil may have a viscosity lower than that of the lubricating oil. In other words, the kinematic viscosity of the hydraulic oil may be lower than the kinematic viscosity of the lubricating oil. By so doing, in comparison with the case where the hydraulic oil is the same high-viscosity oil as the lubricating oil, it is possible to improve performance of response, or the like, in hydraulic control over the shift hydraulic actuator. Conversely, in comparison with the case where the lubricating oil is the same low-viscosity oil as the hydraulic oil, an oil film is sufficiently formed on the bearings and gears of the vehicle automatic transmission, so it is possible to, for example, improve the durability of the bearings and gears and reduce gear noise.

The first seal member and the second seal member may be elastic members.

The first seal member may be ethylene propylene rubber.

The second seal member may be nitrile rubber or acrylic rubber.

### BRIEF DESCRIPTION OF THE DRAWINGS

The foregoing and further objects, features and advantages of the invention will become apparent from the following description of example embodiments with reference to the accompanying drawings, wherein like numerals are used to represent like elements and wherein:
FIG. 1 is a skeleton view that illustrates the schematic configuration of a vehicle driving system according to an embodiment of the invention;
FIG. 2 is a view that shows the structure of an automatic clutch provided for the vehicle driving system of FIG 1;
FIG. 3A and FIG. 3B are views that specifically illustrate the configuration and operation of a synchromesh clutch of an automatic transmission in the vehicle driving system of FIG 1, and are views that show a state where the synchromesh clutch is not engaged, that is, a neutral state;
FIG. 4A and FIG. 4B are views that specifically illustrate the configuration and operation of the synchromesh clutch of the automatic transmission in the vehicle driving system of FIG 1, and are views that show a state where the synchromesh clutch is engaged;
FIG. 5 is a view that exemplifies a circulation path of hydraulic oil supplied to the shift hydraulic control circuit that controls hydraulic pressures applied to a select cylinder and a shift cylinder that function as the shift hydraulic actuators of the automatic transmission in the vehicle driving system of FIG. 1 and a circulation path of lubricating oil of the automatic transmission;
FIG. 6 is an axially cross-sectional view that illustrates the structures of the select cylinder and shift cylinder that function as the shift hydraulic actuators of the automatic transmission in the vehicle driving system of FIG. 1;
FIG 7 is a view that illustrates the relationship between the relative distance in an axis C direction between a first seal member and a second seal member and the overall stroke of a piston shaft in each of the select cylinder and the shift cylinder shown in FIG 6;
FIG. 8 is a view that corresponds to FIG. 6 and that shows another configuration example different from the select cylinder or the shift cylinder shown in FIG. 6; and
FIG 9 is a view that corresponds to FIG 7 and that shows another configuration example different from the select cylinder or the shift cylinder shown in FIG. 7.

### DETAILED DESCRIPTION OF EMBODIMENTS

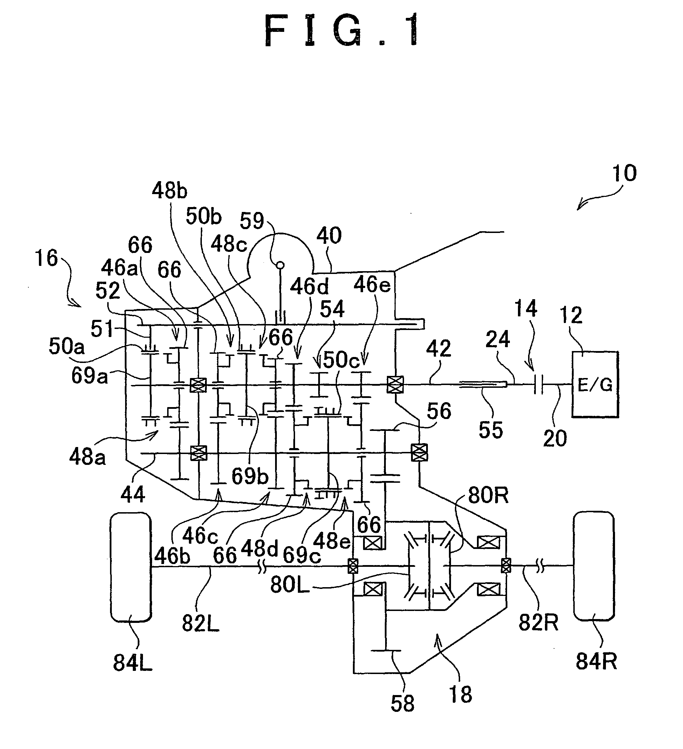

FIG 1 is a skeleton view that illustrates the schematic configuration of a vehicle driving system 10 (hereinafter, referred to as "driving system 10") according to an embodiment of the invention. The driving system 10 is used for a front-engine front-drive (FF) vehicle. The driving system 10 includes an engine 12, an automatic clutch 14, a vehicle automatic transmission 16 (hereinafter, referred to as "automatic transmission 16"), and a differential gear unit 18. The engine 12 serves as a driving source for propelling a vehicle. The automatic transmission 16 is a synchromesh transmission.

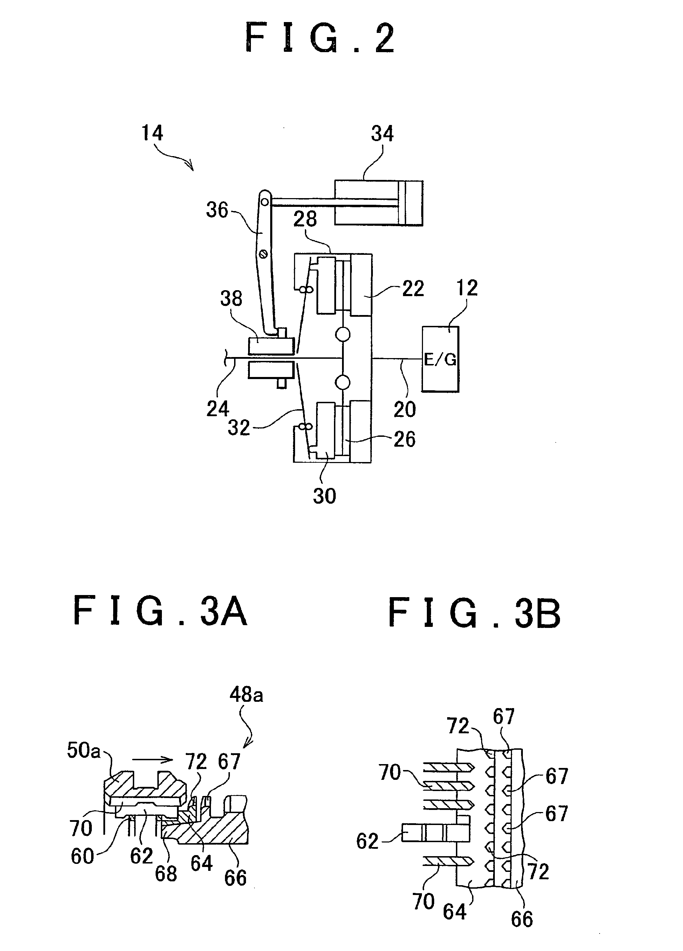

The automatic clutch 14 is, for example, a dry single plate friction clutch as shown in FIG. 2. The automatic clutch 14 includes a flywheel 22, a clutch disk 26, a pressure plate 30, a diaphragm spring 32, and a release sleeve 38. The flywheel 22 is connected to a crankshaft 20 of the engine 12. The clutch disk 26 is mounted on a clutch output shaft 24. The pressure plate 30 is arranged on a clutch cover 28. The diaphragm spring 32 urges the pressure plate 30 toward the flywheel 22 to clamp the clutch disk 26 to thereby transmit power. The release sleeve 38 moves a clutch release cylinder 34 rightward in FIG 2 via a release fork 36 to displace an inner end of the diaphragm spring 32 rightward in FIG 2 to thereby release (disconnect) the clutch. The clutch release cylinder 34 functions as a clutch actuator for releasing or connecting (engaging) the automatic clutch 14.

Referring back to FIG. 1, the automatic transmission 16 and the differential gear unit 18 constitute one transaxle. Therefore, a gear case 40 of the automatic transmission 16 is integrated with a case of the differential gear unit 18. The gear case 40 is a non-rotating member fixed to a vehicle body. Movable components, such as gears and bearings, of the automatic transmission 16 are immersed in lubricating oil of which a predetermined amount is filled in the gear case 40, and lubricated together with the differential gear unit 18. The automatic transmission 16 is a so-called constant mesh parallel shaft transmission. The automatic transmission 16 includes a double-axis mesh transmission mechanism in which a plurality of shift gear pairs (gear pairs) 46a to 46e having different gear ratios and each having a first gear provided rotatably on one of the parallel two shafts and a second gear provided non-rotatably on the other one of the parallel two shafts are arranged between the parallel two shafts, that is, an input shaft 42 and an output shaft 44, and a plurality of synchromesh clutches (synchromesh devices) 48a to 48e are provided in order to selectively couple synchronized gears of those shift gear pairs 46a to 46e, that is, the first gears, to the input shaft 42 or the output shaft 44. That is, the automatic transmission 16 is a transmission in which one of the plurality of shift gear pairs 46a to 46e is selected to allow power transmission to thereby establish a gear.

In addition, the automatic transmission 16 includes fork shafts 52 and a shift and select shaft 59. The fork shafts 52 are three parallel fork shafts that are respectively engaged with three clutch hub sleeves (coupling sleeves) 50a, 50b and 50c included in the configuration of the synchromesh clutches 48a to 48e so as to be relatively rotatable around the axis of the input shaft 42 or the output shaft 44. Thus, the clutch hub sleeve 50a, 50b or 50c is selectively moved in the axial direction of the input shaft 42 or the output shaft 44 to establish any of gears. The shift and select shaft 59 is provided in a direction substantially perpendicular to the fork shafts 52. The shift and select shaft 59 is mechanically moved in a select direction that is an axial direction substantially perpendicular to the fork shafts 52 as a select cylinder 76, which will be described later, operates. The select cylinder functions as a select actuator. By so doing, the shift and select shaft 59 is selectively engaged with any one of the three fork shafts 52. Then, for example, in the present embodiment, the shift and select shaft 59 is pivoted around an axis that is substantially perpendicular to the fork shafts 52 as a shift cylinder, which will be described later, operates. The shift cylinder functions as a shift actuator. This moves the fork shaft 52 in the axial direction of that fork shaft 52 to establish a predetermined gear.

Furthermore, a reverse gear pair 54 is arranged on the input shaft 42 and the output shaft 44 so that the reverse gear pair 54 is not in mesh with each other. A reverse idle gear arranged on a counter shaft (not shown) is brought into mesh with the respective gears of the reverse gear pair 54 to establish a reverse gear. Note that the input shaft 42 is coupled to the clutch output shaft 24 of the automatic clutch 14 via a spline fit coupling 55, and an output gear 56 is arranged on the output shaft 44 and is in mesh with a ring gear 58 of the differential gear unit 18. The differential gear unit 18 is of a bevel gear type. A pair of side gears 80R and 80L are respectively coupled to drive shafts 82R and 82L by spline fit, or the like, and left and right front wheels (driving wheels of the vehicle) 84R and 84L are driven for rotation by the drive shafts 82R and 82L. FIG 1 is an expansion plan in which axes of the input shaft 42, output shaft 44 and ring gear 58 are shown in a common plane.

As described above, the shift and select shaft 59 is positioned at any of three positions in a select direction, at which any of the three fork shafts 52 is selectively engaged by the select cylinder 76. For example, in the present embodiment, the shift and select shaft 59 is positioned at any of a first select position, a second select position and a third select position. In the first select position, the shift and select shaft 59 is engageable with the clutch hub sleeve 50c via a corresponding one of the fork shafts 52 and a corresponding one of forks 51. In the second select position, the shift and select shaft 59 is engageable with the clutch hub sleeve 50b via a corresponding one of the fork shafts 52 and a corresponding one of forks 51. In the third select position, the shift and select shaft 59 is engageable with the clutch hub sleeve 50a via a corresponding one of the fork shafts 52 and a corresponding one of forks 51.

In addition, as described above, the shift and select shaft 59 is pivoted around the axis that is substantially perpendicular to the fork shafts 52 by the shift cylinder 78. By so doing, for example, in the present embodiment, the shift and select shaft 59 is positioned at any one of a first shift position, a second shift position and a neutral position. In the first shift position, the clutch hub sleeves 50a, 50b and 50c are moved rightward in FIG. 1 via the fork shaft 52 and the fork 51 to cause any one of synchromesh clutches 48a, 48c and 48e to be engaged. In the second shift position, the clutch hub sleeves 50b and 50c are moved leftward in FIG. 1 via the fork shaft 52 and the fork 51 to cause the synchromesh clutch 48b or 48d to be engaged. In the neutral position, none of the synchromesh clutches 48a to 48e is engaged, and a neutral state is established.

In the first shift position of the first select position, the synchromesh clutch 48e is coupled to establish a first gear G1 having a highest gear ratio (= the rotational speed N_{IN} of the input shaft 42 / the rotational speed N_{OUT} of the output shaft 44). In the second shift position of the first select position, the synchromesh clutch 48d is coupled to establish a second gear G2 having a second highest gear ratio. In the first shift position of the second select position, the synchromesh clutch 48c is coupled to establish a third gear G3 having a third highest gear ratio. In the second shift position of the second select position, the synchromesh clutch 48b is coupled to establish a fourth gear G4 having a fourth highest gear ratio. The gear ratio of the fourth gear G4 is approximately 1. In the first shift position of the third select position, the synchromesh clutch 48a is coupled to establish a fifth gear G5 having a lowest gear ratio. In the second shift position of the third select position, a reverse gear is established. The select cylinder 76 and shift cylinder 78 that move the shift and select shaft 59 and the fork shafts 52 function as shift hydraulic actuators that may be operated to shift the gears of the automatic transmission 16 without operating force of the driver.

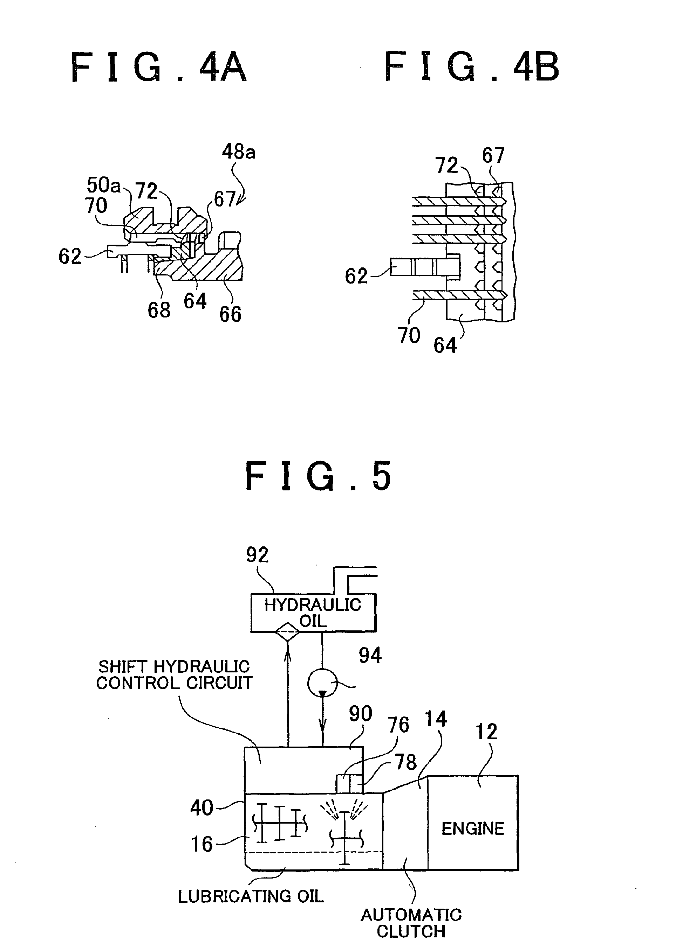

FIG 3A, FIG. 3B, FIG. 4A and FIG 4B are views that specifically illustrate the configuration and operation of the synchromesh clutch 48a. The synchromesh clutch 48a includes the clutch hub sleeve 50a, a shifting key 62, a synchronizer ring (synchronous ring) 64, coupling teeth 67, a cone portion 68 and a hub 69a (see FIG. 1). The shifting key 62 is engaged with the clutch hub sleeve 50a by a key spring 60. The synchronizer ring 64 is rotated about the input shaft 42 as the axis together with the shifting key 62 with predetermined play. The coupling teeth 67 formed of outer peripheral teeth are integrally provided for an input gear 66, that is, the first gear, of the shift gear pair 46a. The hub 69a is fixed to the input shaft 42. The clutch hub sleeve 50a is constantly rotated integrally with the input shaft 42 in such a manner that spline teeth (inner peripheral teeth) 70 provided on the inner peripheral surface thereof and spline teeth (outer peripheral teeth) provided on the outer peripheral surface of the hub 69a are spline-fitted, while the clutch hub sleeve 50a is movable in the axial direction of the input shaft 42.

As the clutch hub sleeve 50a is moved rightward in FIG. 3A by the shift cylinder 78 via the fork shaft 52 and the fork 51 as described above, when there is a difference in rotational speed between the clutch hub sleeve 50a and the input gear 66, the synchronizer ring 64 is pressed toward the cone portion 68 via the shifting key 62 and taper-fitted, and power is transmitted to the input gear 66 by friction therebetween. Then, spline teeth 70 of the clutch hub sleeve 50a are brought into contact with spline teeth 72 provided for the synchronizer ring 64 to block movement of the clutch hub sleeve 50a in the axial direction any more.

However, as a difference in rotational speed between the clutch hub sleeve 50a and the input gear 66 is eliminated, that is, as the rotational speed of the clutch hub sleeve 50a is synchronized with the rotational speed of the input gear 66, the clutch hub sleeve 50a is allowed to move in the axial direction. Thus, the clutch hub sleeve 50a is further moved rightward. While the clutch hub sleeve 50a (coupling sleeve) is in process of being moved toward the coupling teeth 67 of the input gear 66, the synchronizer ring 64 contacts with the inner peripheral teeth of the clutch hub sleeve 50a until the rotational speed of the coupling teeth 67 is synchronized with the rotational speed of the clutch hub sleeve 50a. Thus, the synchronizer ring 64 functions as a synchronous ring that blocks movement of the clutch hub sleeve 50a. Then, as shown in FIG 4A and FIG 4B, the spline teeth 70 are in mesh with the spline teeth 72 provided for the synchronizer ring 64, and further in mesh with the coupling teeth 67 provided for the input gear 66. By so doing, the input shaft 42 is coupled to the input gear 66 as one unit, and power is transmitted from the input shaft 42 to the output shaft 44 via the shift gear pair 46a. FIG 3A and FIG 3B show a state where the synchromesh clutch 48a is not engaged, that is, a neutral state. FIG 4A and FIG. 4B show a state where the synchromesh clutch 48a is engaged. FIG. 3A and FIG. 4A are axially cross-sectional views taken along a plane including an axis. FIG 3B and FIG 4B are expansion plans of the states of FIG 3A and FIG 4A as viewed from an outer peripheral side, except a cylindrical portion of the clutch hub sleeve 50a.

The other synchromesh clutches 48b to 48e also have substantially the same configuration as that of the synchromesh clutch 48a; however, the clutch hub sleeve 50b is shared by the synchromesh clutches 48b and 48c, and the clutch hub sleeve 50c is shared by the synchromesh clutches 48d and 48e.

FIG. 5 is a view that exemplifies a circulation path of hydraulic oil supplied to a shift hydraulic control circuit 90 that controls hydraulic pressures applied to the select cylinder 76 and the shift cylinder 78 and a circulation path of lubricating oil of the automatic transmission 16.

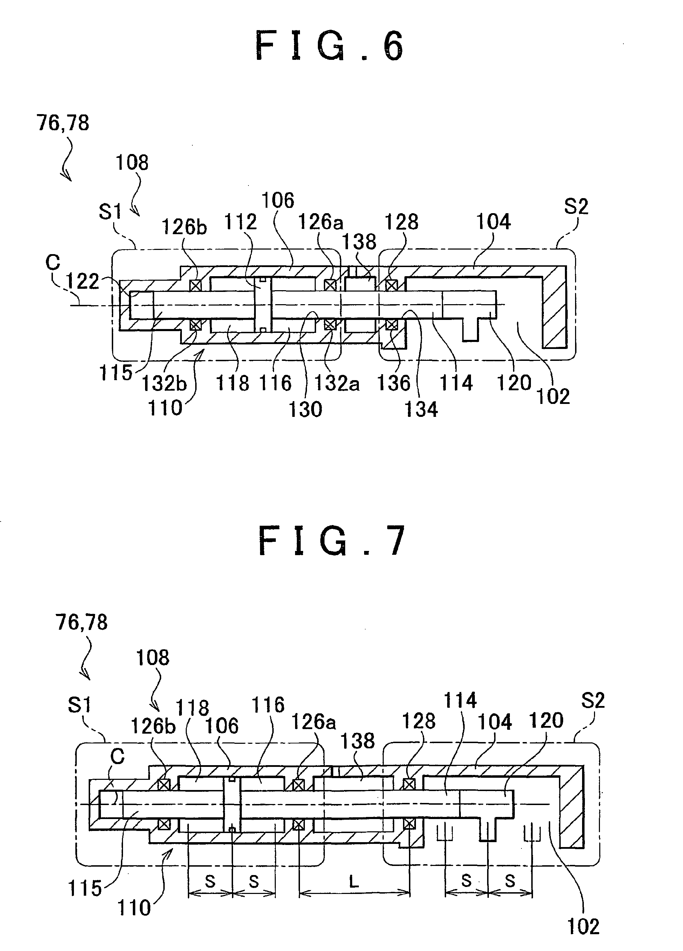

In the present embodiment, hydraulic oil supplied to the shift hydraulic control circuit 90 and lubricating oil used for the automatic transmission 16 are of different kinds. Specifically, an oil having a viscosity lower than that of the lubricating oil is employed as the hydraulic oil so as to obtain control response at low temperatures. For example, brake fluid is used as the hydraulic oil. On the other hand, an oil having a viscosity higher than brake fluid used as the hydraulic oil and suitable for lubricating gears, bearings, or the like, is generally employed as the lubricating oil in order to obtain lubricating performance, or the like. Thus, the driving system 10 includes a circulation path of hydraulic oil supplied to the shift hydraulic control circuit 90 and a circulation path of lubricating oil of the automatic transmission 16 independently of each other. For example, as shown in FIG 5, a hydraulic oil tank 92 and a hydraulic oil pump 94 driven by the engine 12 are provided in the circulation path of hydraulic oil. Hydraulic oil stored in the hydraulic oil tank 92 is pressurized by the hydraulic oil pump 94 and supplied to the shift hydraulic control circuit 90 as a source pressure for hydraulic control over the select cylinder 76 and the shift cylinder 78. Then, a drain from the shift hydraulic control circuit 90 is returned to the hydraulic oil tank 92. In the meantime, in the circulation path of lubricating oil of the automatic transmission 16, the lubricating oil stored at the lower space of the gear case 40 is splashed by the rotation of gears, or the like, immersed in the lubricating oil in the gear case 40 or is pumped by a lubricating oil pump provided for the automatic transmission 16 and driven by the engine 12 and is then sprayed to various portions inside the gear case 40. Thus, components inside the gear case 40 and components inside control chambers 102 (see FIG 6) of the select cylinder 76 and shift cylinder 78, which will be described later, are lubricated.

FIG 6 is an axially cross-sectional view that illustrates the structures of the select cylinder 76 and shift cylinder 78 that function as the shift hydraulic actuators. The select cylinder 76 and the shift cylinder 78 have different strokes from each other; however, both have similar mechanical configurations. For the sake of simple description, the following description will be made on the assumption that FIG 6 shows the select cylinder 76.

As shown in FIG. 6, the select cylinder 76 includes a gear case coupling housing 104 and a cylindrical cylinder body 106. The gear case coupling housing 104 has the control chamber 102, and is coupled to the gear case 40. The control chamber 102 is a space that is in fluid communication with the inside of the gear case 40 of the automatic transmission 16. The gear case coupling housing 104 and the cylindrical cylinder body 106 are arranged along the axis C (see FIG 6). The gear case coupling housing 104 and the cylinder body 106 constitute an actuator housing 108 as one unit. The select cylinder 76 includes a hydraulic piston 112, a piston shaft 114 and a guide shaft 115. The hydraulic piston 112 is fitted in a piston chamber 110 of the cylinder body 106 slidably in the axis C direction. The piston chamber 110 is supplied with the hydraulic oil. Note that the axis C may be regarded as an axis according to the aspect of the invention, and the axis C direction may be regarded as an axial direction according to the aspect of the invention.

The actuator housing 108 is a fixed member that is integrally fixed to the gear case 40 of the automatic transmission 16 by bolting, or the like.

The piston chamber 110 is partitioned in the axis C direction by the hydraulic piston 112 into a first oil chamber 116 and a second oil chamber 118. The first oil chamber 116 is located adjacent to the gear case coupling housing 104. The second oil chamber 118 is located away from the gear case coupling housing 104. Then, a packing groove is formed on the outer periphery of the hydraulic piston 112, and the packing groove accommodates a piston packing so that hydraulic oil does not flow between the first oil chamber 116 and the second oil chamber 118 via the hydraulic piston 112.

The piston shaft 114 extends through part of the cylinder body 106 and part of the gear case coupling housing 104. One end of the piston shaft 114 is coupled to the hydraulic piston 112, and the other end of the piston shaft 114 protrudes into the gear case coupling housing 104. Then, an inner lever 120 is formed at the other end of the piston shaft 114. The inner lever 120 serves as a control member of the automatic transmission 16. The inner lever 120 is operably coupled to the shift and select shaft 59 to operate the shift and select shaft 59. The shift and select shaft 59 serves as a shift member for shifting the gear of the automatic transmission 16. In other words, the piston shaft 114 is a member that transmits the thrust force of the hydraulic piston 112 to the shift and select shaft 59.

In addition, the cylinder body 106 has a guide hole 122 that is in fluid communication with the second oil chamber 118 at a side opposite from the first oil chamber 116 in the axis C direction. The guide hole 122 has the same axis as the axis C and has a substantially circular cross section. The guide hole 122 is open to the second oil chamber 118, and is in fluid communication with the second oil chamber 118. Then, the proximal end of the guide shaft 115 is coupled to the hydraulic piston 112, and the distal end of the guide shaft 115 is inserted in the guide hole 122. Thus, the guide shaft 115, the hydraulic piston 112 and the piston shaft 114 are serially coupled to one another along the axis C so that they are relatively not movable, and are slidable in the axis C direction with respect to the actuator housing 108. Note that the piston shaft 114 and the guide shaft 115 may be a one-unit piston shaft member for which the hydraulic piston 112 is provided midway in the axial direction.

In the thus configured select cylinder 76, for example, when the hydraulic oil having a predetermined hydraulic pressure is supplied to the first oil chamber 116, and hydraulic oil is drained from the second oil chamber 118, thrust force directed leftward in FIG 6 is generated in the hydraulic piston 112. Thus, the guide shaft 115, the hydraulic piston 112 and the piston shaft 114 move leftward in FIG 6 as one unit, that is, the inner lever 120 moves leftward in FIG. 6. In the meantime, when the hydraulic oil having a predetermined hydraulic pressure is supplied to the second oil chamber 118, and hydraulic oil is drained from the first oil chamber 116, thrust force directed rightward in FIG. 6 is generated in the hydraulic piston 112. Thus, the guide shaft 115, the hydraulic piston 112 and the piston shaft 114 move rightward in FIG 6 as one unit, that is, the inner lever 120 moves rightward in FIG 6.

In addition, the select cylinder 76 includes a pair of first seal members 126a and 126b on both sides of the piston chamber 110 in the axis C direction, and further includes a second seal member 128 at a portion at which the piston shaft 114 of the gear case coupling housing 104 extends through. As described with reference to FIG. 6, seal members located adjacent to the piston chamber surrounded by the alternate long and short dashed line S1 in FIG 6 are the first seal members 126a and 126b, and a seal member located adjacent to the control chamber surrounded by the alternate long and short dashed line S2 is the second seal member 128. Then, the pair of first seal members 126a and 126b and the second seal member 128 are serially arranged in the axis C direction.

The pair of first-seal members 126a and 126b are elastic members, such as annular rubbers, and are made of a predetermined first material suitable for the type of the hydraulic oil that presses the hydraulic piston 112. For example, the first material may be the one suitable for sealing the hydraulic oil, such as ethylene propylene rubber (EPDM). Then, if brake fluid is employed as the hydraulic oil, the material of the first seal members 126a and 126b is the one suitable for sealing brake fluid as the hydraulic oil. The first seal member 126a is fitted in a first seal groove 132a that is annularly formed around the axis C in a through hole 130 through which the piston shaft 114 of the cylinder body 106 extends. The first seal member 126a is in annular contact with the outer peripheral surface of the piston shaft 114 with a contact pressure to a degree such that the first seal member 126a does not impair sliding of the piston shaft 114. Then, the first seal member 126a prevents the hydraulic oil from leaking from between the cylinder body 106 and the piston shaft 114 toward the outside of the piston chamber 110.

The first seal member 126b is fitted in a first seal groove 132b that is annularly formed around the axis C at the open portion of the guide hole 122. The first seal member 126b is in annular contact with the outer peripheral surface of the guide shaft 115 with a contact pressure to a degree such that the first seal member 126b does not impair sliding of the guide shaft 115. Then, the first seal member 126b prevents the hydraulic oil from leaking from between the cylinder body 106 and the guide shaft 115 toward the outside of the piston chamber 110.

The second seal member 128 is an elastic member, such as an annular rubber, and is made of a predetermined second material suitable for the type of the lubricating oil of the automatic transmission 16. For example, the second material is different from the first material and is the one suitable for sealing the lubricating oil, such as nitrile rubber and acrylic rubber. The nitrile rubber and the acrylic rubber have high corrosion resistance against the lubricating oil and also have heat resistance. The second seal member 128 is fitted in a second seal groove 136 that is annularly formed around the axis C in a through hole 134 through which the piston shaft 114 of the gear case coupling housing 104 extends. The second seal member 128 is in annular contact with the outer peripheral surface of the piston shaft 114 with a contact pressure to a degree such that the second seal member 128 does not impair sliding of the piston shaft 114. Then, the second seal member 128 prevents lubricating oil of the automatic transmission 16 from leaking from between the gear case coupling housing 104 and the piston shaft 114. Note that, in FIG 6, a cavity 138 is provided in the actuator housing 108 between the first seal member 126a and the second seal member 128 and is in fluid communication with the outside of the gear case 40.

Incidentally, the second seal member 128 shown in FIG. 6 sufficiently prevents leakage of lubricating oil of the automatic transmission 16; however, when the first seal member 126a and the second seal member 128 are arranged in proximity to each other in the axis C direction, it is presumable that an oil film of the lubricating oil stuck on the outer peripheral surface of the piston shaft 114 spreads to the first seal member 126a when the piston shaft 114 is moved to a one side (left side in FIG. 6) thereof. If the lubricating oil frequently contacts with the first seal member 126a, it may deteriorate the durability of the first seal member 126a. In addition, this also applies to the case where the piston shaft 114 is moved to the other end (right side in FIG. 6) thereof, and an oil film of the hydraulic oil stuck on the outer peripheral surface of the piston shaft 114 spreads to the second seal member 128. Thus, in FIG. 6, a relative distance L between the second seal member 128 and the first seal member 126a arranged closest to the second seal member 128 in the axis C direction is not particularly specified; however, the relative distance L is desirably longer than or equal to the overall stroke ST of the piston shaft 114 in the axis C direction. FIG 7 is a view that illustrates the above point. It should be noted that it is not necessary that the relative distance L is longer than or equal to the overall stroke ST of the piston shaft 114 in the axis C direction. In addition, the select cylinder 76 and the shift cylinder 78 are similar to each other, so, as in the case of the description of FIG 6, the following description is made on the assumption that FIG 7 shows the select cylinder 76.

FIG. 7 is a view that illustrates the relationship between the relative distance L in the axis C direction between the first seal member 126a and the second seal member 128 and the overall stroke ST of the piston shaft 114. In FIG 7, among the three positions to which the select cylinder 76 is shifted, the case where the piston shaft 114 is positioned at a center position P_{CT} of the overall stroke ST is indicated by the solid line. Then, the piston shaft 114 moves toward the one side (left side in FIG 6) or the other side (right side in FIG 6) by one-side stroke S at the maximum. Thus, in FIG 7, the overall stroke ST of the piston shaft 114 is twice the one-side stroke S, and the relative distance L in the axis C direction between the first seal member 126a and the second seal member 128 is larger than or equal to twice the one-side stroke S.

With the present embodiment, the first seal members 126a and 126b that prevent the hydraulic oil in the piston chamber 110 from leaking from between the cylinder body 106 and the piston shaft 114 are made of the predetermined first material suitable for the type of the hydraulic oil. In addition, the second seal member 128 that prevents the lubricating oil of the automatic transmission 16, different from the hydraulic oil, from leaking from between the gear case coupling housing 104 and the piston shaft 114 is made of the predetermined second material suitable for the type of the lubricating oil. Therefore, an oil having a low kinematic viscosity suitable for hydraulic control operation of the select cylinder 76 and shift cylinder 78 is employed as the hydraulic oil to thereby make it possible to improve performance related to hydraulic control over the select cylinder 76 and the shift cylinder 78. For example, improvement in performance related to the hydraulic control may, for example, include improvement in shift control performance and hydraulic response, extension of the operable temperature range of the hydraulic control circuit 90 particularly to a low temperature, capability of relatively decreasing the hydraulic pressure of hydraulic oil as a whole even when it is required to increase the flow rate of the hydraulic oil in hydraulic control over the hydraulic control circuit 90, and a reduction in weight because of reduction in load applied by the hydraulic oil to the hydraulic control circuit 90 or portions of the select cylinder 76 and shift cylinder 78 owing to the decrease in pressure of the hydraulic oil. In addition, an oil having a kinematic viscosity suitable for lubricating the automatic transmission 16 is employed as the lubricating oil to make it possible to, for example, improve the durability of bearings and gears of the automatic transmission 16 and reduce gear noise. Furthermore, the materials of the first seal members 126a and 126b and the material of the second seal member 128 are the ones that are respectively suitable for the hydraulic oil and the lubricating oil, so it is possible for any of the hydraulic oil and the lubricating oil to possess sufficient sealing performance.

In addition, with the present embodiment, the hydraulic oil has a viscosity lower than that of the lubricating oil of the automatic transmission 16. Thus, in comparison with the case where the hydraulic oil is the same high-viscosity oil as the lubricating oil, it is possible to improve performance of response, or the like, in hydraulic control over the select cylinder 76 and the shift cylinder 78. Conversely, in comparison with the case where the lubricating oil is the same low-viscosity oil as the hydraulic oil, an oil film is sufficiently formed on the bearings and gears of the automatic transmission 16, so it is possible to, for example, improve the durability of the bearings and gears and reduce gear noise.

In addition, with the present embodiment, as shown in FIG 7, the second seal member 128 and the first seal member 126a are desirably located at the relative distance L that is longer than or equal to the overall stroke ST of the piston shaft 114 in the axis C direction. If so doing, an oil film of the hydraulic oil stuck on the piston shaft 114 does not contact with the second seal member 128 even when the piston shaft 114 is moved, and an oil film of the lubricating oil stuck on the piston shaft 114 does not contact with the first seal member 126a even when the piston shaft 114 is moved. Thus, it is possible to further sufficiently ensure the sealing performance and durability of the first seal member 126a and second seal member 128.

The embodiment of the invention is described in detail with reference to the accompanying drawings; however, the above embodiment is only illustrative. The aspect of the invention may be implemented in another form.

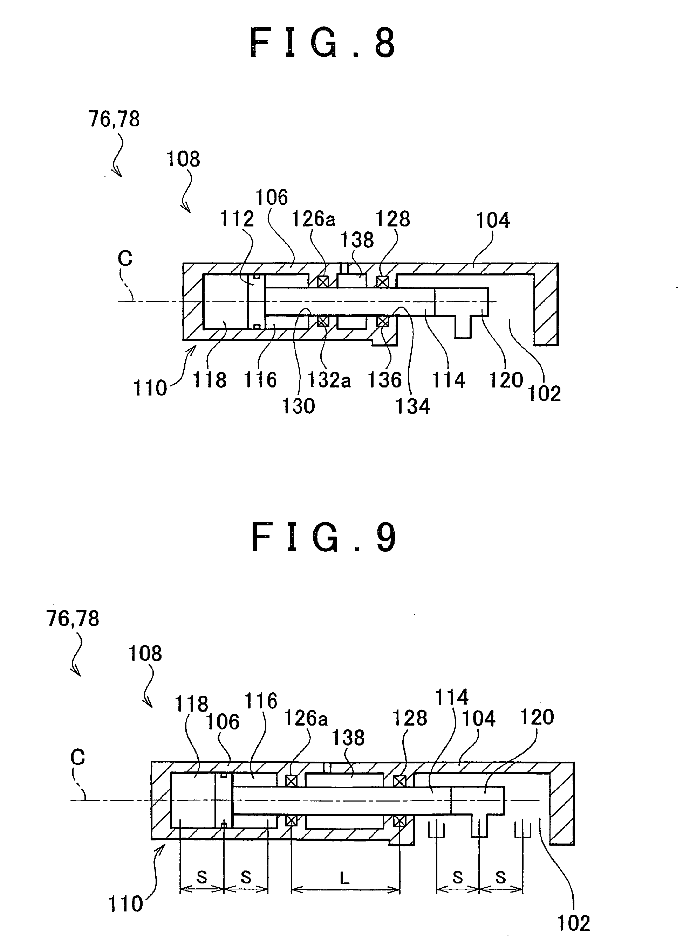

For example, in the above described embodiment, two first seal members 126 are provided for each of the select cylinder 76 and the shift cylinder 78; instead, one first seal member 126 may be provided for the select cylinder 76 and/or the shift cylinder 78. For example, when each of the select cylinder 76 and the shift cylinder 78 has one first seal member 126, the select cylinder 76 and the shift cylinder 78 shown in FIG. 6 have the configuration shown in FIG 8, and the select cylinder 76 and the shift cylinder 78 shown in FIG 7 have the configuration shown in FIG. 9.

In addition, in the above described embodiment, an internal combustion engine, such as a gasoline engine and a diesel engine, is widely used as the engine 12, which serves as the power source for propelling the vehicle. Furthermore, an electric motor, or the like, may be used in addition to the engine 12 as an auxiliary power source for propelling the vehicle. Alternatively, only an electric motor may be used as a power source for propelling the vehicle.

In addition, in the above described embodiment, the relative distance L between the first seal member 126a and the second seal member 128 shown in FIG. 7 is desirably longer than or equal to the overall stroke ST of the piston shaft 114 in the axis C direction; further desirably, the relative distance L is larger than the overall stroke ST.

While the invention has been described with reference to example embodiments thereof, it is to be understood that the invention is not limited to the described embodiments or constructions. The invention is intended to cover various modifications and equivalent arrangements.

## Claims

1. A shift hydraulic actuator (76, 78) that is operable to shift a gear of a constant mesh vehicle automatic transmission (16) that establishes the gear by selecting one of a plurality of gear pairs (46a to 46e) having different gear ratios to allow power transmission, comprising:
a cylindrical cylinder body (106);
a hydraulic piston (112) that is fitted in a piston chamber (110) of the cylinder body (106) slidably in an axial direction (C);
a gear case coupling housing (104) that has a space (102) that is, in use, in fluid communication with an inside of a gear case (40) of the vehicle automatic transmission (16) and that is, in use, coupled to the gear case (40);
a piston shaft (114) that has an axis in the axial direction (C) and that extends through part of the cylinder body (106) and part of the gear case coupling housing (104), wherein one end of the piston shaft (114) is coupled to the hydraulic piston (112) and the other end of the piston shaft (114) protrudes into the gear case coupling housing (104) and, in use, transmits thrust force of the hydraulic piston (112) to a shift member (59) that shifts the gear and that is located in the gear case (40);
a first seal member (126a) that prevents hydraulic oil pressing the hydraulic piston (112) from leaking from between the cylinder body and the piston shaft and that is made of a predetermined first material depending on the type of the hydraulic oil; and
a second seal member (128) that prevents lubricating oil of the vehicle automatic transmission (16), different from the hydraulic oil, from leaking from between the gear case coupling housing (104) and the piston shaft (114) and that is made of a predetermined second material depending on the type of the lubricating oil;
wherein one or two or more of the first seal members (126a, 126b) are provided, and a relative distance (L) between the second seal member (128) and the first seal member (126a) located closest to the second seal member (128) in the axial direction (C) is longer than or equal to the overall stroke (2S) of the piston shaft (114) in the axial direction (C).

2. The shift hydraulic actuator (76, 78) according to claim 1, wherein the hydraulic oil has a viscosity lower than that of the lubricating oil.

3. The shift hydraulic actuator (76, 78) according to claim 1, wherein the kinematic viscosity of the hydraulic oil is lower than the kinematic viscosity of the lubricating oil.

4. The shift hydraulic actuator (76, 78) according to any one of claims 1 to 3, wherein the first seal member (126a) and the second seal member (128) are elastic members.

5. The shift hydraulic actuator (76, 78) according to claim 4, wherein the first seal member (126a) is ethylene propylene rubber.

6. The shift hydraulic actuator (76, 78) according to claim 4, wherein the second seal member (128) is nitrile rubber or acrylic rubber.

7. A constant mesh vehicle automatic transmission (16) comprising:
a plurality of gear pairs (46a to 46e) having different gear ratios, wherein a gear of the constant mesh vehicle automatic transmission (16) is establishable by selecting one of the plurality of gear pairs (46a to 46e) to allow power transmission;
a gear case (40);
a shift member (59) for shifting the gear, wherein the shift member (59) is located in the gear case (40); and
the shift hydraulic actuator (76, 78) according to any one of claims 1 to 6;
wherein the space (102) of the gear case coupling housing (104) is in fluid communication with the inside of the gear case (40);
the gear case coupling housing (104) is coupled to the gear case (40); and
the other end of the piston shaft (114) is arranged to transmit thrust force of the hydraulic piston (112) to the shift member (59).

## Patentansprüche

1. Hydraulischer Schaltaktuator (76, 78), der betreibbar ist, um einen Gang eines Klauenautomatikgetriebes eines Fahrzeugs einzulegen, das den Gang durch Auswählen eines aus einer Vielzahl von Zahnradpaaren (46a bis 46e) mit je unterschiedlichen Übersetzungsverhältnissen einrichtet, um eine Kraftübertragung zu ermöglichten, mit:
einem zylinderischen Zylinderkörper (106);
einem Hydraulikkolben (112), der in einer Kolbenkammer (110) des Zylinderkörpers (106) in einer axialen Richtung (C) verschiebbar eingebaut ist;
einem Getriebekastenverbindungsgehäuse (104), das einen Raum (102) aufweist, der bei Benutzung in einer Fluidverbindung mit einem Inneren eines Getriebekasten (40) des Automatikgetriebes (16) des Fahrzeugs steht und der bei Benutzung mit dem Getriebekasten (40) gekoppelt ist;
einem Kolbenschaft (114), der eine Achse in der Axialrichtung (C) aufweist und der sich durch einen Teil des Zylinderkörpers (106) und einen Teil des Getriebekastenverbindungsgehäuses (104) erstreckt, wobei ein Ende des Kolbenschafts (114) mit dem Hydraulikkolben (112) gekoppelt, ist und das andere Ende des Kolbenschafts (114) in das Getriebekastenverbindungsgehäuse (104) vorsteht und bei Benutzung Schubkraft des hydraulischen Kolbens (112) auf ein Schaltteil (59) überträgt, das den Gang schaltet und in dem Getriebekasten (40) angeordnet ist;
ein erstes Dichtteil (126a), das verhindert, dass Hydrauliköl, das den hydraulischen Kolben drückt, zwischen dem Zylinderkörper und dem Kolbenschaft austritt und das abhängig vom Typ des Hydrauliköls aus einem vorab festgelegten ersten Material besteht; und
ein zweites Dichtteil (128), das verhindert, dass Schmieröl des Automatikgetriebes (16), das sich vom Hydrauliköl unterscheidet, zwischen dem Getriebekastenverbindungsgehäuse (104) und dem Kolbenschaft (114) austritt und das abhängig vom Typ des Schmieröls aus einem vorab festgelegten zweiten Material hergestellt ist;
wobei ein oder zwei oder mehrere der ersten Dichtteile (126a, 126b) vorgesehen sind, und ein relativer Abstand (L) zwischen dem zweiten Dichtteil (128) und dem ersten Dichtteil (126a), das in der axialen Richtung (C) am nächsten beim zweiten Dichtteil liegt, länger als oder gleich lang wie der Gesamthub (2S) des Kolbenschafts (114) in der axialen Richtung (C) ist.

2. Hydraulischer Schaltaktuator (76, 78) nach Anspruch 1, wobei das Hydrauliköl eine Viskosität aufweist, die niedriger als jene des Schmieröls ist.

3. Hydraulischer Schaltaktuator (76, 78) nach Anspruch 1, wobei die kinematische Viskosität des Hydrauliköls niedriger als die kinematische Viskosität des Schmieröls ist.

4. Hydraulischer Schaltaktuator (76, 78) nach einem der Ansprüche 1 bis 3, wobei das erste Dichtteil (126a) und das zweite Dichtteil (128) elastische Teile sind.

5. Hydraulischer Schaltaktuator (76, 78) nach Anspruch 4, wobei das erste Dichtteil (126a) aus Ethylen-Propylen-Kautschuk besteht.

6. Hydraulischer Schaltaktuator (76, 78) nach Anspruch 4, wobei das zweite Dichtteil (128) aus Nitrilkautschuk oder Acrylkautschuk besteht.

7. Klauenautomatikgetriebe (16) eines Fahrzeugs mit:
einer Vielzahl von Zahnradpaaren (46a bis 46e) mit jeweils unterschiedlichen Übersetzungsverhältnissen, wobei ein Gang des Klauenautomatikgetriebe (16) zum Ermöglichen einer Kraftübertragung durch Auswählen eines aus einer Vielzahl von Zahnradpaaren (46a bis 46e) einrichtbar ist;
einem Getriebekasten (40);
einem Schaltteil (59) zum Einlegen des Gangs, wobei das Schaltteil (59) in dem Getriebekasten (40) angeordnet ist; und
dem hydraulischen Schaltaktuator nach einem der Ansprüche 1 bis 6;
wobei der Raum (102) des Getriebekastenverbindungsgehäuses (104) in Fluidverbindung mit dem Inneren des Getriebekastens (40) steht;
das Getriebekastenverbindungsgehäuse (104) mit dem Getriebekasten (40) gekoppelt ist; und
das andere Ende des Kolbenschafts (114) so angeordnet ist, dass es Schubkraft des Hydraulikkolbens (112) auf das Schaltteil (59) überträgt.

## Revendications

1. Actionneur hydraulique de changement de vitesse (76, 78) qui peut fonctionner pour changer une vitesse d'une transmission automatique de véhicule à engrènement constant (16) qui établit la vitesse en sélectionnant l'un parmi une pluralité de paires d'engrenages (46a à 46e) ayant des rapports d'engrenage différents pour permettre la transmission de puissance, comprenant :
un corps de cylindre cylindrique (106) ;
un piston hydraulique (112) qui est monté dans une chambre de piston (110) du corps de cylindre (106) de manière coulissante dans une direction axiale (C) ;
un boîtier de couplage de carter d'engrenage (104) qui a un espace (102) qui, à l'usage, est en communication de fluide avec un intérieur d'un carter d'engrenage (40) de la transmission automatique de véhicule (16) et qui, à l'usage, est couplé au carter d'engrenage (40) ;
un arbre de piston (114) qui a un axe dans la direction axiale (C) et qui s'étend à travers une partie du corps de cylindre (106) et une partie du boîtier de couplage de carter d'engrenage (104), dans lequel une extrémité de l'arbre de piston (114) est couplée au piston hydraulique (112) et l'autre extrémité de l'arbre de piston (114) fait saillie dans le boîtier de couplage de carter d'engrenage (104) et, à l'usage, transmet la force de poussée du piston hydraulique (112) à un élément de changement de vitesse (59) qui change la vitesse et est positionné dans le carter d'engrenage (40) ;
un premier élément formant joint d'étanchéité (126a) qui empêche l'huile hydraulique appuyant sur le piston hydraulique (112) de fuir entre le corps de cylindre et l'arbre de piston et qui est réalisé avec un premier matériau prédéterminé en fonction du type de l'huile hydraulique ; et
un deuxième élément formant joint d'étanchéité (128) qui empêche l'huile de lubrification de la transmission automatique de véhicule (16), différente de l'huile hydraulique, de fuir entre le boîtier de couplage de carter d'engrenage (104) et l'arbre de piston (114) et qui est réalisé avec un deuxième matériau prédéterminé en fonction du type de l'huile de lubrification ;
dans lequel on prévoit un ou deux ou plusieurs premiers éléments formant joint d'étanchéité (126a, 126b), et une distance relative (L) entre le deuxième élément formant joint d'étanchéité (128) et le premier élément formant joint d'étanchéité (126a) positionné le plus à proximité du deuxième élément formant joint d'étanchéité (128) dans la direction axiale (C) est plus longue ou égale à la course globale (2S) de l'arbre de piston (114) dans la direction axiale (C).

2. Actionneur hydraulique de changement de vitesse (76, 78) selon la revendication 1, dans lequel l'huile hydraulique a une viscosité inférieure à celle de l'huile de lubrification.

3. Actionneur hydraulique de changement de vitesse (76, 78) selon la revendication 1, dans lequel la viscosité cinématique de l'huile hydraulique est inférieure à la viscosité cinématique de l'huile de lubrification.

4. Actionneur hydraulique de changement de vitesse (76, 78) selon l'une quelconque des revendications 1 à 3, dans lequel le premier élément formant joint d'étanchéité (126a) et le deuxième élément formant joint d'étanchéité (128) sont des éléments élastiques.

5. Actionneur hydraulique de changement de vitesse (76, 78) selon la revendication 4, dans lequel le premier élément formant joint d'étanchéité (126a) est du caoutchouc éthylène-propylène.

6. Actionneur hydraulique de changement de vitesse (76, 78) selon la revendication 4, dans lequel ledit deuxième élément formant joint d'étanchéité (128) est du caoutchouc nitrile ou du caoutchouc acrylique.

7. Transmission automatique de véhicule à engrènement constant (16) comprenant :
une pluralité de paires d'engrenages (46a à 46e) ayant des rapports d'engrenages différents, dans laquelle une vitesse de la transmission automatique de véhicule à engrènement constant (16) peut être établie en sélectionnant l'une de la pluralité de paires d'engrenages (46a à 46e) pour permettre la transmission de puissance ;
un carter d'engrenage (40) ;
un élément de changement de vitesse (59) pour changer la vitesse, dans laquelle l'élément de changement de vitesse (59) est positionné dans le carter d'engrenage (40) ; et
l'actionneur hydraulique de changement de vitesse (76, 78) selon l'une quelconque des revendications 1 à 6 ;
dans laquelle l'espace (102) du boîtier de couplage de carter d'engrenage (104) est en communication de fluide avec l'intérieur du carter d'engrenage (40) ;
le boîtier de couplage de carter d'engrenage (104) est couplé au carter d'engrenage (40) ; et
l'autre extrémité de l'arbre de piston (114) est agencée pour transmettre la force de poussée du piston hydraulique (112) à l'élément de changement de vitesse (59).
